# FASCICULE DE BREVET EUROPEEN

(11) **EP 2 853 499 B1**
(45) Date de publication et mention de la délivrance du brevet: **03.08.2016**
(21) Numéro de dépôt: 14186339.9
(22) Date de dépôt: 25.09.2014
(51) Int. Cl.: B65B 57/00, B65B 69/00, B26F 1/24, B26D 1/02, B26D 1/03, B26D 7/26, B26D 7/22, B26D 1/00

(54) **Dispositif destiné à l'ouverture de sacs**
Vorrichtung zum Öffnen von Beuteln
Device for opening bags

(30) Priorité: 25.09.2013 FR 1359207
(43) Date de publication de la demande: 01.04.2015
(73) Titulaire: De Calmes, Manuel, 26750 Saint Paul les Romans (FR)
(72) Inventeur: De Calmes, Manuel, 26750 Saint Paul les Romans (FR)
(74) Mandataire: Delorme, Nicolas

(56) Documents cités:
- EP-A1- 1 658 939
- GB-A- 2 082 540
- GB-A- 2 099 928
- GB-A- 2 246 755
- US-A- 4 040 389
- US-A- 4 539 239
- US-A- 6 098 515
- US-B1- 6 293 318

## Description

La présente invention concerne un dispositif destiné à ouvrir des sacs, notamment des sacs contenant des matériaux sous la forme de solides divisés ou pulvérulents tels des poudres ou granulés d'engrais, semences ou tout autre produit pour l'agriculture et l'industrie, au moment de leur transfert dans une trémie.

Traditionnellement, les sacs de grande contenance, communément appelés 'big bags' ou 'grands récipients vrac souples' (GRVS) (avoisinant 1000L) sont éventrés manuellement par un opérateur, notamment lorsque le sac est surélevé au moyen par exemple d'un chariot élévateur ou d'un crochet de grue. Cette manipulation induit des risques d'écrasements de l'opérateur sous le poids du contenant. Par ailleurs, lorsque les matériaux contenus sont dangereux, l'opérateur est amené à respirer les poussières toxiques provenant de ces matériaux. Document US 4040389 divulgue un dispositif avec une solution constructive que peut être adapté à l'ouverture de sacs, comprenant plusieurs lames orientées suivant une direction verticale et fixées le long d'un axe central avec une pointe dans l'extrémité supérieure.

Il existe ainsi un besoin de fournir un dispositif qui supprime ces risques d'écrasement et d'exposition aux poussières toxiques. A cet effet, la présente invention propose un dispositif, destiné à l'ouverture de sacs, notamment de sacs contenant des matériaux pour l'agriculture et l'industrie, le dispositif comprenant un axe central orienté selon une direction verticale, dont une portion supérieure comprend au moins une pointe adaptée pour percer un sac, le dispositif comprenant en outre au moins une lame adaptée pour trancher un sac et solidarisée à une portion inférieure de l'axe central, chaque lame présentant un fil orienté du coté de la portion supérieure de l'axe central, et le dispositif comprend également des moyens d'immobilisation agencés pour immobiliser une portion libre de chaque lame opposée à la portion inférieure de l'axe central. Ainsi, les risques de création d'un jeu entre l'extrémité libre des lames et l'axe central sont réduits notamment sous l'impact du déversement du contenu des sacs, ce qui garantit la fiabilité du dispositif.

En service, la pointe de l'axe central et le fil tranchant des lames sont orientés vers le haut, de sorte à pouvoir percer un sac lorsque celui-ci descend vers le dispositif par effet de la gravité. Le sac ou 'big bag' à percer peut être un sac du type constitué par un textile technique, notamment à base de polypropylène, ou tout équivalent. Ainsi, ce dispositif permet d'éviter l'opération manuelle consistant à éventrer le sac et élimine les risques de sécurité qui en découlent. Dans sa descente, le sac rencontre d'abord la pointe du dispositif qui le perce. Ce dispositif permet ainsi d'augmenter la vitesse d'ouverture du sac et de l'écoulement de son contenu. Un gain de temps est également obtenu du fait qu'il n'est plus nécessaire que l'opérateur aux commandes de l'engin manipulant le sac, telle une grue de levage ou un chariot élevateur, ne se déplace pour percer les sacs. L'opérateur peut en effet commander à distance, depuis le volant de commande de l'engin, l'opération d'ouverture et de transfert du contenu du sac. Ce dispositif permet ainsi une gestion automatisée et sécurisée de l'ouverture de big bags.

De préférence, la longueur de chaque lame, mesurée entre l'axe central et une région d'extrémité de la lame, est plus grande que la hauteur de chaque lame, mesurée selon une direction parallèle à l'axe central. Ceci permet de trancher plus efficacement un big bag tout en assurant une stabilité du sac reposant sur la longueur de la ou des lames.

Avantageusement, chaque lame comprend une section de forme générale curviligne. Ainsi, la surface de fil tranchant de chacune des lames est augmentée par comparaison avec une lame de section rectiligne.

De préférence, chaque lame comprend une section de forme générale en arc de cercle. Cette configuration est la plus propice pour trancher rapidement et efficacement le sac lorsque celui-ci, une fois percé par la pointe, vient s'aplatir sur chacune des lames sous l'effet de la pesanteur.

Avantageusement, chaque lame présente une hauteur variable diminuant depuis l'axe central jusqu'à une extrémité libre de ladite lame. Il est entendu dans le présent document que l'expression « chaque lame présente une hauteur variable » signifie que la hauteur de chaque lame est variable sur la totalité de la longueur de la lame. Cette forme de réalisation permet aux lames d'épouser la forme du sac lorsqu'il s'aplatit de sorte que leur efficacité est améliorée.

De préférence, les lames présentent des dents. Ainsi, une fois le sac percé la pointe de l'axe central, la propagation de l'ouverture est améliorée par les dents de chacune des lames.

Selon une possibilité, le dispositif comprend au moins deux rivets agencés pour fixer chaque lame à la portion inférieure de l'axe central.

Selon une autre disposition, le dispositif comprend plusieurs vis agencées pour fixer chaque lame à la portion inférieure de l'axe central.Cette configuration permet de désolidariser simplement et rapidement les lames de la portion inférieure de l'axe central, notamment pour faciliter leur entretien.Bien entendu, tout autre dispositif de fixation efficace peut être utilisé.

De préférence, le dispositif comprend au moins trois lames. Cette configuration résulte d'un équilibre entre efficacité du dispositif et coût de fabrication de celui-ci.

De préférence, la pointe présente une forme générale conique. Cette forme permet en effet d'assurer un perçage efficace d'un sac.

Avantageusement, la pointe présente des évidements ménagés en surface de la forme générale conique. La présence de ces évidements formant des arêtes sur la forme conique coopèrent avec l'extrémité de la pointe pour augmenter le caractère tranchant du dispositif et la taille de l'ouverture obtenue. De plus, ces évidements facilitent le déversement du matériau au niveau de la pointe permettant l'affaissement plus rapide du sac sur les dents des lames et la vidange du contenu.

De préférence, la pointe présente trois évidements présentant une forme hélicoïdale. Cette configuration permet d'optimiser l'efficacité de la pointe et la rapidité du déversement du matériau.

Selon une possibilité, la pointe comprend une extrémité conique et une portion tronconique, le demi-angle au sommet de l'extrémité conique étant supérieur au demi-angle au sommet de la portion tronconique. Cette conformation a pour effet d'augmenter la solidité de l'ensemble et permettre la mise en place de nervures tout en permettant une économie de matière.

Selon une variante de réalisation, la pointe présente une forme en portion de cylindre évidé de manière à former une arête. Ainsi, l'arête de la pointe procure ainsi un aspect tranchant et l'évidement facilite la vidange gravitaire du contenu du sac.

Selon une disposition, chaque moyen d'immobilisation se prolonge par un axe secondaire s'étendant le long de la hauteur de l'extrémité libre de chaque lame, le sommet de chaque axe secondaire présentant une forme cylindrique tronquée par un plan oblique par rapport à chaque axe secondaire.

La forme cylindrique tronquée obliquement permet de compléter le tranchant des dents de scie de chaque lame pour un meilleur déchirement du sac.

De préférence, l'axe central et chaque lame comprennent un matériau constitué d'un matériau dur tel que du métal, notamment de l'inox, ou du plastique et chaque moyen d'immobilisation comprend un matériau élastomère. Ainsi, le dispositif est constitué de matériaux nobles et durables dans le temps, assurant la longévité du dispositif.

Selon une variante de réalisation, le dispositif comprend au moins un support de lame configuré pour supporter au moins la dite au moins une lame. Cette configuration permet d'utiliser des lames d'une hauteur moins importante pour réduire la matière utilisée et faciliter la fabriquer des lames.

Avantageusement la au moins une lame est fixée au support de lame, le support de lame étant fixé à l'axe central de sorte à permettre la solidarisation de la au moins une lame à la portion inférieure de l'axe central. Ainsi la lame est facilement changée sans nécessiter de démonter l'ensemble du dispositif.

De préférence, le dispositif comprend au moins un organe de calage configuré pour caler la au moins une lame selon une direction latérale, et l'organe de calage est fixé au support de lame de sorte que la portion de sommet de l'organe de calage présente une altitude, mesurée selon la direction de l'axe central, inférieure à l'altitude du fil de la au moins une lame supportée sur le support de lame, mesurée selon la direction de l'axe central. Dans ce mode de réalisation, l'organe de calage encadre ainsi la lame et le support de lame. Il est fixé de façon immobile à l'axe central par l'intermédiaire du support de lame de sorte que l'organe de calage fourni un moyen d'immobilisation de la lame.

Avantageusement, le dispositif comprend une enveloppe de sécurité configurée pour envelopper au moins en partie la ou chaque lame et le au moins un organe de calage, l'enveloppe de sécurité étant mobile entre une position de sécurité dans laquelle l'enveloppe de sécurité cache le fil de la ou chaque lame et une position escamotée dans laquelle l'enveloppe de sécurité dégage le fil de la ou chaque lame. Cette enveloppe de sécurité limite ainsi les risques d'accident pour un opérateur, notamment lors de la manipulation du dispositif.

Selon une disposition, lorsque l'enveloppe de sécurité est en position de sécurité, la portion sommitale de l'enveloppe de sécurité présente une altitude, mesurée selon la direction de l'axe central, supérieure à l'altitude du fil de la ou chaque lame supportée par le support de lame, mesurée selon la direction de l'axe central, et en ce que lorsque l'enveloppe de sécurité est en position escamotée, la portion sommitale présente une altitude inférieure à celle du fil de la ou chaque lame. Ainsi dans la position de sécurité, la portion sommitale de l'enveloppe cache le fil de la lame tandis qu'en position escamotée, la portion sommitale dégage le fil de la lame qui peut alors être utilisé pour découper un sac.

De préférence, le dispositif comprend au moins un organe de rappel, agencé pour prendre appui contre l'organe de calage et contre l'enveloppe de sécurité de façon à rappeler l'enveloppe de sécurité en position de sécurité. L'organe de rappel peut prendre la forme d'un ressort élastique comme d'un vérin hydraulique ou pneumatique piloté par une unité de commande.

Selon une disposition l'organe de rappel est également agencé pour prendre appui contre le support de lame.

Avantageusement, l'enveloppe de sécurité comprend au moins une ouverture primaire, l'organe de calage comprend au moins une ouverture complémentaire en regard de la au moins une ouverture primaire, l'ouverture primaire et l'ouverture complémentaire étant configurées de sorte à former une fenêtre traversante lorsque l'enveloppe de sécurité est en position de sécurité, l'organe de rappel prenant appui sur des bords opposés de la fenêtre traversante. Il est ainsi possible de prévoir un emplacement pour l'organe de rappel facilement accessible.

Selon une autre disposition, le support de lame comprend également au moins une ouverture complémentaire et l'organe de rappel est également agencé pour prendre appui contre les bords opposés de cette ouverture.

Plus précisément, l'organe de rappel prend appui contre le bord inférieur et contre le bord supérieur de l'ouverture complémentaire prévue dans l'organe de calage, et dans le support de lame, qui sont fixes par rapport aux lames. Dans le même temps, l'organe de rappel prend appui contre le bord inférieur et le bord supérieur de l'ouverture primaire prévue dans l'enveloppe de sécurité. Lorsque l'enveloppe de sécurité s'abaisse pour passer de sa position de sécurité à sa position escamotée pour dégager les lames, l'organe de rappel est comprimé par le bord supérieur de l'ouverture primaire de l'enveloppe tout en en restant en appui contre le bord inférieur de l'ouverture complémentaire qui est fixe.

De préférence, le au moins un organe de rappel est configuré pour se comprimer lorsqu'une force gravitationnelle d'une intensité prédéterminée est appliquée sur la portion sommitale de l'enveloppe de sécurité, de sorte à entrainer le déplacement de l'enveloppe de sécurité de la position de sécurité à la position escamotée.

L'intensité prédéterminée de la force peut être choisie selon le poids des sacs à ouvrir, par exemple fixé à 600kg, à partir duquel l'enveloppe de sécurité passe dans sa position escamotée en dégageant le fil des lames.

Selon une autre disposition, une pluralité d'orifices est ménagée dans des portions latérales de l'enveloppe de sécurité de sorte à faciliter le nettoyage, notamment au jet d'eau.

D'autres aspects, buts et avantages de la présente invention apparaîtront mieux à la lecture de la description suivante de trois modes de réalisation de celle-ci, donnée à titre d'exemples non limitatifs et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.

La figure 1 est une vue du dispositif selon un premier mode de réalisation de l'invention.

La figure 2 est une vue dispositif illustré à la figure 1 fixé sur une trém ie.

La figure 3 est une vue du dispositif selon un second mode de réalisation de l'invention.

La figure 4 est une vue agrandie d'une axe central de la figure 2.

La figure 5 illustre une vue d'une variante de réalisation dans laquelle la lame est supportée par un support de lame.

La figure 6 illustre une vue d'un organe de calage selon une variante de réalisation.

La figure 7 illustre une vue schématique d'une enveloppe de sécurité selon un troisième mode de réalisation de l'invention.

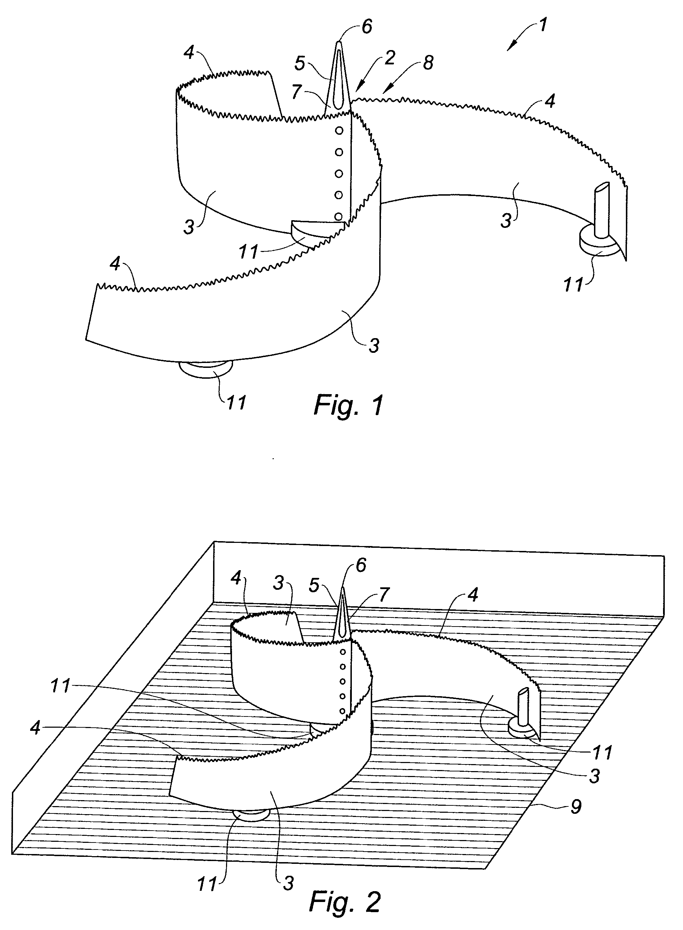

La figure 1 illustre un dispositif 1 permettant l'ouverture de sacs, notamment de big bags, comprenant un axe central 2 et trois lames 3 présentant des dents 4. L'axe central 2 comprend une portion supérieure présentant une pointe 5 adaptée pour percer un sac. Cette pointe 5 présente une forme générale conique à la surface de laquelle trois évidements ont été ménagés. Cette forme est particulièrement intéressante car elle facilite la vidange du contenu du sac dans le même temps que le sac est percé par le sommet de la pointe 5.

En particulier, la pointe 5 comprend une extrémité conique 6 et une portion tronconique 7, adjacente à l'extrémité conique 6, configurées de sorte que le demi-angle au sommet de l'extrémité conique 6 est supérieur au demi-angle au sommet de la portion tronconique 7.

Par ailleurs, l'axe central 2 comprend une portion inférieure 8 sur laquelle sont fixées les trois lames 3 du dispositif 1. La fixation est obtenue au moyen de plusieurs pions de centrage par lame 3 et est complétée par des vis, réparties de façon homogène sur la hauteur de chaque lame 3. Les lames 3 et l'axe central 2 sont en inox de sorte à garantir la longévité du dispositif 1. Selon une variante, ils sont en matériau dur, pouvant être un métal, ou un matériau plastique.

Comme représenté sur la figure 1, chaque lame 3 présente un fil orienté du coté de la portion supérieure de l'axe central 2 et chaque fil est doté de dents 4 de sorte à augmenter son tranchant. Ainsi, lorsque le dispositif 1 est monté sur une trémie 9 par exemple (figure 2), la portion supérieure de l'axe central 2, comportant la pointe 5, et les dents 4 sont orientés vers le sac qui descend par gravité vers le dispositif 1 pour y être percé et vidangé.

Chaque lame 3 présente une section de forme courbe en arc de cercle et présente une hauteur variable tout au long de cette courbe. La hauteur de chaque lame 3 diminue en effet depuis son point de solidarisation avec l'axe central 2 jusqu'à son extrémité libre opposée.

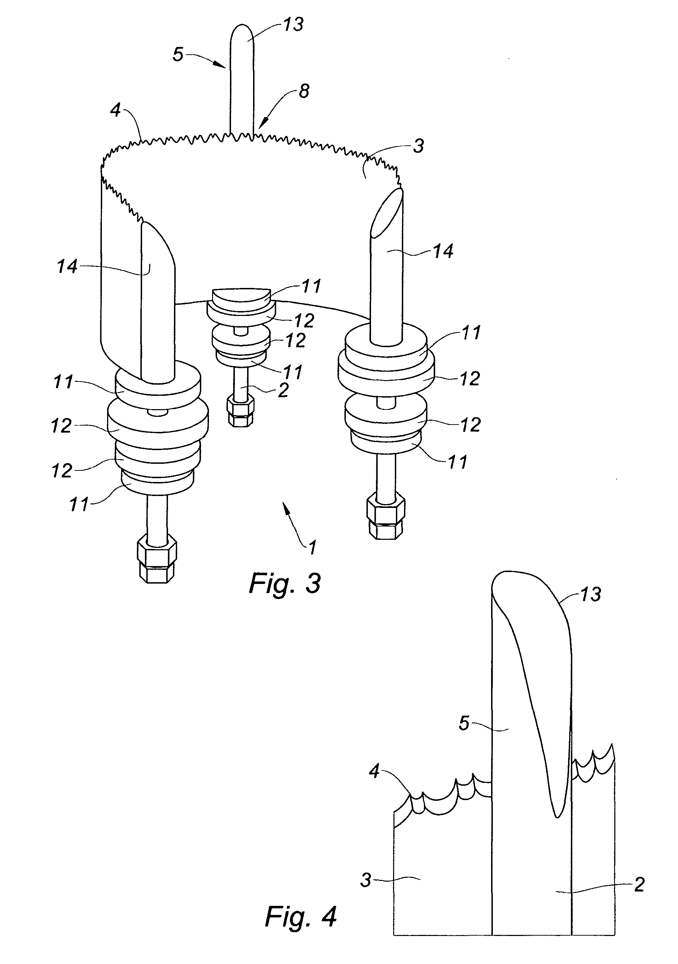

Le dispositif 1 comprend également des moyens d'immobilisation agencés pour immobiliser une portion à l'extrémité libre de chaque lame 3 (illustrés de façon tronquée à la figure 1). Chaque moyen d'immobilisation comprend une première rondelle 11 solidaire d'une lame 3 et conçue en un matériau dur métallique, tel que de l'acier. Elle est disposée sur un appareil de réception du contenu du sac et sur lequel le dispositif 1 est destiné à être fixé, telle qu'une trémie 9. Chaque moyen d'immobilisation comprend également une seconde rondelle 12 (visible figure 3) en matériau élastomère intercalée entre la première rondelle 11 et la trémie 9 (figure 2). Le même empilement comprenant une nouvelle seconde rondelle 12 et une nouvelle première rondelle 11 est reproduit de l'autre coté de la trémie 9. Ces moyens d'immobilisation permettent avantageusement de limiter les vibrations et de bloquer le dispositif 1 sur la trémie 9 sans détérioration de celle-ci (peinture, mâchage...)

La figure 3 illustre un dispositif 1 selon un second mode de réalisation de l'invention. Ce dispositif 1 diffère de celui du premier mode de réalisation en ce qu'il ne comprend qu'une lame 3 unique, fixée en son milieu à une portion inférieure 8 de l'axe central 2. Ce dispositif 1 diffère également du précédent en ce que la pointe 5 de l'axe central 2 comprend une forme de portion de cylindre évidé (figure 4) de sorte à présenter une arête 13 tranchante adaptée à la rupture du sac et un évidement destiné à faciliter la vidange du contenu du sac.

Par ailleurs, une autre différence avec le premier mode de réalisation réside en ce que chaque moyen d'immobilisation se prolonge par un axe secondaire 14 s'étendant le long de la hauteur de l'extrémité libre de la lame 3. Le sommet de chaque axe secondaire 14 présente une forme cylindrique tronquée obliquement par rapport à la direction de chaque axe secondaire 14. Cet élément participe également à augmenter la capacité de coupe du dispositif 1.

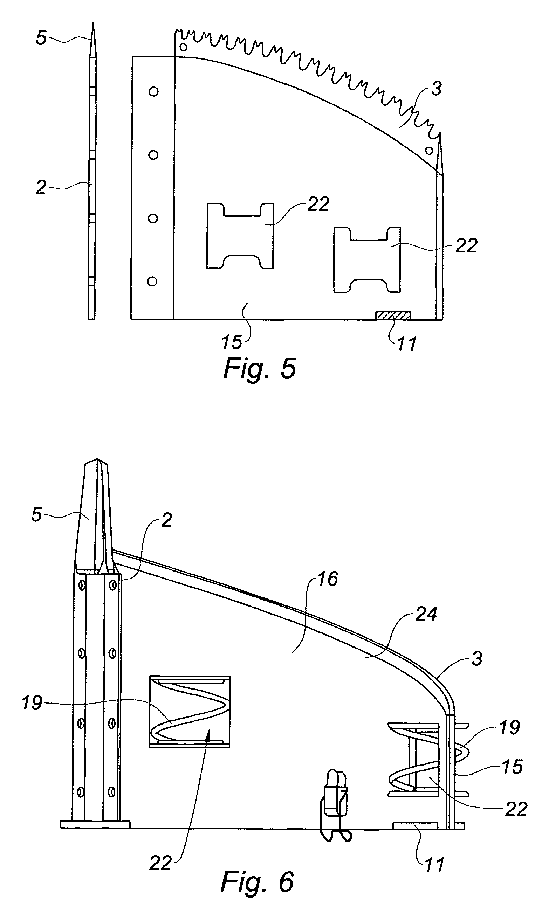

La figure 5 illustre une variante de réalisation dans laquelle chacune des lames 3 est supportée par un support de lame 15, présentant un profil similaire à celui des lames 3 et permettant une solidarisation des lames 3 avec l'axe central 2. Ces supports de lame 15 permettent également la fixation des moyens d'immobilisation de la portion libre de la lame 3, opposée à la portion solidarisée à l'axe central 2.

Par ailleurs, les supports de lame 15 permettent de surélever ces dernières pour faciliter leur remplacement si nécessaire. Ces supports de lame 15 sont par ailleurs plus simples à fabriquer selon les dimensions souhaitées que les lames 3 elles mêmes. Il est ainsi possible de fabriquer une forme de lame 3 qui correspond à des critères de fabrication industrielle à bas coût et de compenser grâce au support de lame 15.

La figure 6 illustre une variante de réalisation dans laquelle le dispositif 1 comprend en outre trois organes de calage 16 configurés pour caler chacun une lame 3 selon une direction latérale. Ces organes de calage 16 sont également agencés pour être fixé chacun à un support de lame 15 de sorte que le fil des lames 3 présente une altitude supérieure à l'altitude d'une portion de sommet 24 des organes de calage 16, les altitudes étant mesurées selon la direction de l'axe central 2. Dans cette variante de réalisation, les moyens d'immobilisation de chaque lame 3 sont également fixés à chacun des organes de calage 16. Selon une possibilité, chaque organe de calage 16 comprend deux parois latérales dont la forme est similaire à celle des lames, et les portions inférieures des deux parois latérales sont reliées entre elles par un pont de liaison sensiblement horizontal et sur lequel le support de lame 15 repose.

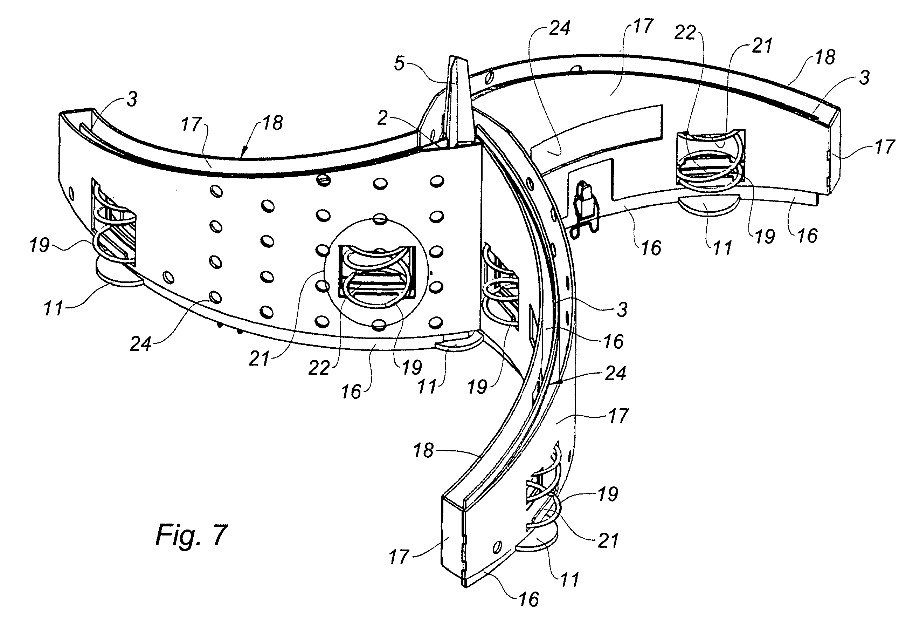

La figure 7 illustre un troisième mode de réalisation de l'invention dans lequel le dispositif 1 comprend une enveloppe de sécurité 17 enveloppant en partie le contour latéral des trois lames 3 du dispositif 1. Cette enveloppe 17 est mobile entre une position de sécurité, qui est une position de repos, et une position escamotée dans laquelle le niveau de l'enveloppe 17 est abaissé pour dégager le fil des lames 3 et permettre la découpe de sacs (non illustrée). En effet, l'enveloppe de sécurité 17 est configurée de sorte que dans sa position de sécurité, la portion sommitale 18 de l'enveloppe présente une altitude supérieure à celle du fil des lames 3, supportées chacune par un support de lame 15 (figure 5), les altitudes étant mesurées selon la direction de l'axe central 2. Ceci permet de cacher le fil des lames 3 et de limiter les risques de manipulation pour un opérateur. Réciproquement, lorsque l'enveloppe de sécurité 17 est en position escamotée, l'altitude de sa portion sommitale 18 est inférieure à l'altitude du fil des lames 3, fixées sur un support de lame 15, de sorte à dégager le fil des lames 3, les altitudes étant toujours mesurées selon la direction de l'axe central 2. Le dispositif 1 est alors prêt à la découpe d'un sac.

Comme illustré à la figure 7, l'enveloppe de sécurité 17 enveloppe également en partie les trois organes de calage 16 (dont l'un est également visible à la figure 6). Par ailleurs, afin d'assurer le déplacement de l'enveloppe de sécurité 17 entre ses deux positions, six ouvertures primaires 21 sont ménagées à travers l'enveloppe de sécurité 17 et un nombre identiques d'ouvertures complémentaires 22 (figures 6 et 7) est ménagé dans les trois organes de calage 16 ainsi que dans les trois supports de lame 15 (figure 5 et 7). Ces ouvertures 21,22 sont alignées de sorte à former dans chacun des supports de lame 15 et des organes de calage 16, deux fenêtres traversantes. Six organes de rappel 19 sont agencés pour prendre chacun appui sur des bords opposés d'une fenêtre traversante, selon la direction de l'axe central 2. Chaque organe de rappel 19 prend ainsi appui contre un organe de calage 16, contre un support de lame 15 respectif et contre l'enveloppe de sécurité 17 de façon à rappeler l'enveloppe de sécurité 17 en position de sécurité. Ainsi, lorsque d'une force gravitationnelle d'une intensité prédéterminée est appliquée sur la portion sommitale 18 de l'enveloppe de sécurité 17, les organes de rappel 19 se compriment pour déplacer l'enveloppe de sécurité 17 de sa position de sécurité à sa position escamotée, en prenant appui notamment contre les bords des ouvertures 21 des organes de calage 16. Selon une possibilité non illustrée, la force gravitationnelle prédéterminée est formée par un sac présentant une masse de 600 kg, placé sur la pointe 5 de l'axe central 2 et sur les portions sommitales 18 de l'enveloppe 17.

Comme il est visible à la figure 7, l'organe de rappel 19 est constitué d'un ressort élastique mais selon une variante non illustrée, il est formé d'un vérin commandé par une unité de pilotage destinée à déterminer si l'intensité prédéterminée de la force est atteinte.

Selon une possibilité non illustrée, le taraudage de l'organe de rappel 19, les nombre de lames 3, de supports de lames 15, d'organes de calage 16 et d'ouvertures 21,22 peuvent varier de sorte à proposer un dispositif 1 adapté aux dimensions et aux masses des sacs à découper.

Par ailleurs, comme on peut le voir sur la figure 7, une pluralité d'orifices 23est ménagée dans les portions latérales de l'enveloppe de sécurité 17, de sorte à faciliter le nettoyage de l'enveloppe et de son contenu pour éviter le blocage du fonctionnement du dispositif 1 et notamment de l'organe de rappel 19.

Ainsi, le dispositif 1 selon l'invention est durable dans le temps, permet de percer et de trancher un sac pour une vidange rapide, sécurisée pour l'opérateur, notamment grâce à une enveloppe de sécurité 17 mobile entre deux positions.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons.

## Revendications

1. Dispositif (1), destiné à l'ouverture de sacs, notamment de sacs contenant des matériaux pour l'agriculture et l'industrie, le dispositif (1) comprenant un axe central (2) orienté selon une direction verticale, dont une portion supérieure comprend au moins une pointe (5) adaptée pour percer un sac, le dispositif (1) comprenant en outre au moins une lame (3) adaptée pour trancher un sac et solidarisée à une portion inférieure (8) de l'axe central (2), la ou chaque lame (3) présentant un fil orienté du coté de la portion supérieure de l'axe central (2), **caracterisé en ce que** le dispositif comprend égatement des moyens d'immobilisation agencés pour immobiliser une portion libre de chaque lame (3) opposée à la portion inférieure (8) de l'axe central (2).

2. Dispositif (1) selon la revendication 1, **caractérisé en ce que** la longueur de chaque lame (3), mesurée entre l'axe central (2) et une région d'extrémité de la lame (3), est plus grande que la hauteur de chaque lame (3) mesurée selon une direction parallèle à l'axe central (2).

3. Dispositif (1) selon l'une des revendications 1 à 2, **caractérisé en ce que** le dispositif (1) comprend au moins un support de lame (15) configuré pour supporter au moins la dite au moins une lame (3).

4. Dispositif (1) selon la revendication 3, **caractérisé en ce que** le dispositif (1) comprend au moins un organe de calage (16) configuré pour caler la au moins une lame (3) selon une direction latérale, et **en ce que** l'organe de calage (16) est fixé au support de lame (15) de sorte que la portion de sommet (24) de l'organe de calage (16) présente une altitude, mesurée selon la direction de l'axe central (2), inférieure à l'altitude du fil de la au moins une lame (3) supportée sur le support de lame (15), mesurée selon la direction de l'axe central (2).

5. Dispositif (1) la revendication 4, **caractérisé en ce que** le dispositif (1) comprend une enveloppe de sécurité (17) configurée pour envelopper au moins en partie la ou chaque lame (3) et le au moins un organe de calage (16), l'enveloppe de sécurité (17) étant mobile entre une position de sécurité dans laquelle l'enveloppe de sécurité (17) cache le fil de la ou chaque lame (3) et une position escamotée dans laquelle l'enveloppe de sécurité (17) dégage le fil de la ou chaque lame (3).

6. Dispositif (1) selon la revendication 5, **caractérisé en ce que** lorsque l'enveloppe de sécurité (17) est en position de sécurité, la portion sommitale (18) de l'enveloppe de sécurité (17) présente une altitude, mesurée selon la direction de l'axe central (2), supérieure à l'altitude du fil de la ou chaque lame (3) supportée par le support de lame (15), mesurée selon la direction de l'axe central (2), et **en ce que** lorsque l'enveloppe de sécurité (17) est en position escamotée, la portion sommitale (18) présente une altitude inférieure à celle du fil de la ou chaque lame (3).

7. Dispositif (1) selon l'une des revendications 5 à 6, **caractérisé en ce que** le dispositif (1) comprend au moins un organe de rappel (19), agencé pour prendre appui contre l'organe de calage (16) et contre l'enveloppe de sécurité (17) de façon à rappeler l'enveloppe de sécurité (17) en position de sécurité.

8. Dispositif (1) selon la revendication 7, **caractérisé en ce que** l'enveloppe de sécurité (17) comprend au moins une ouverture primaire (21), l'organe de calage (16) comprend au moins une ouverture complémentaire (22) en regard de la au moins une ouverture primaire (21), l'ouverture primaire (21) et l'ouverture complémentaire (22) étant configurées de sorte à former une fenêtre traversante lorsque l'enveloppe de sécurité (17) est en position de sécurité, l'organe de rappel (19) prenant appui sur des bords opposés de la fenêtre traversante.

9. Dispositif (1) selon la revendication 8, **caractérisé en ce que** le au moins un organe de rappel (19) est configuré pour se comprimer lorsqu'une force gravitationnelle d'une intensité prédéterminée est appliquée sur la portion sommitale (18) de l'enveloppe de sécurité (17), de sorte à entrainer le déplacement de l'enveloppe de sécurité (17) de la position de sécurité à la position escamotée.

10. Dispositif (1) selon l'une des revendications 5 à 9, **caractérisé en ce que** une pluralité d'orifices (23) est ménagée dans des portions latérales de l'enveloppe de sécurité (17) de sorte à faciliter le nettoyage, notamment au jet d'eau.

11. Dispositif (1) selon l'une des revendications 1 à 10, **caractérisé en ce que** la où chaque lame (3) comprend une section de forme générale en arc de cercle.

12. Dispositif (1) selon l'une des revendications 1 à 11, **caractérisé en ce que** le dispositif (1) comprend au moins trois lames (3).

13. Dispositif (1) selon l'une des revendications 1 à 12, **caractérisé en ce que** la pointe (5) comprend une extrémité conique (6) et une portion tronconique (7), le demi-angle au sommet de l'extrémité conique (6) étant supérieur au demi-angle au sommet de la portion tronconique (7).

14. Dispositif (1) selon l'une des revendications 1 à 13, **caractérisé en ce que** chaque moyen d'immobilisation se prolonge par un axe secondaire (14) s'étendant le long de la hauteur de l'extrémité libre de chaque lame (3), le sommet de chaque axe secondaire (14) présentant une forme cylindrique tronquée par un plan oblique par rapport à chaque axe secondaire (14).

## Patentansprüche

1. Vorrichtung (1) die zum Öffnen von Säcken, vor allem von Säcken die Materialien für die Landwirtschaft und Industrie enthalten, bestimmt ist, wobei die Vorrichtung (1) eine zentrale Achse (2) umfasst, die in eine vertikale Richtung ausgerichtet ist, von der ein oberer Abschnitt zumindest eine Spitze (5) umfasst, die geeignet ist, um einen Sack anzubohren, wobei die Vorrichtung (1) darüber hinaus zumindest eine Klinge (3) umfasst, die geeignet ist, um einen Sack zu durchschneiden, und die fest mit einem unteren Abschnitt (8) der zentralen Achse (2) der verbunden ist, wobei die oder jede Klinge (3) einen Draht aufweist, der auf die Seite des oberen Abschnitts der zentralen Achse (2) ausgerichtet ist, **dadurch gekennzeichnet, dass** die Vorrichtung auch Immobilisierungsmittel umfasst, die angeordnet sind, um einen freien Abschnitt einer jeden Klinge (3) gegenüber dem unteren Abschnitt (8) der zentralen Achse (2) zu immobilisieren.

2. Vorrichtung (1) nach Anspruch 1, **dadurch gekennzeichnet, dass** die Länge einer jeden Klinge (3), die zwischen der zentralen Achse (2) und einem Endbereich der Klinge (3) gemessen wird, größer ist, als die Höhe einer jeden Klinge (3), die in eine Richtung parallel zur zentralen Achse (2) gemessen wird.

3. Vorrichtung (1) nach einem der Ansprüche 1 bis 2, **dadurch gekennzeichnet, dass** die Vorrichtung (1) zumindest einen Klingenhalter (15) umfasst, der konfiguriert ist, um zumindest die besagte zumindest eine Klinge (3) zu halten.

4. Vorrichtung (1) nach Anspruch 3, **dadurch gekennzeichnet, dass** die Vorrichtung (1) zumindest ein Organ zum Festkeilen (16) umfasst, das konfiguriert ist, um die zumindest eine Klinge (3) in eine seitliche Richtung festzukeilen, und dadurch, dass das Organ zum Festkeilen (16) auf dem Klingenhalter (15) befestigt ist, sodass der Spitzenabschnitt (24) des Organs zum Festkeilen (16) eine Höhe aufweist, die in die Richtung der zentralen Achse (2) gemessen wird, die geringer ist, als die Höhe des Drahtes der zumindest einen Klinge (3), die auf dem Klingenhalter (15) gehalten wird, die in die Richtung der zentralen Achse (2) gemessen wird.

5. Vorrichtung (1) nach Anspruch 4, **dadurch gekennzeichnet, dass** die Vorrichtung (1) eine Sicherheitsumhüllung (17) umfasst, die konfiguriert ist, um die oder jede Klinge (3) und das zumindest eine Organ zum Festkeilen (16) zumindest teilweise einzuhüllen, wobei die Sicherheitsumhüllung (17) zwischen einer Sicherheitsposition, in der die Sicherheitsumhüllung (17) den Draht der oder einer jeden Klinge (3) verdeckt, und einer eingezogenen Position bewegt werden kann, in der die Sicherheitsumhüllung (17) den Draht oder die oder jede Klinge (3) freigibt.

6. Vorrichtung (1) nach Anspruch 5, **dadurch gekennzeichnet, dass** der Scheitelabschnitt (18) der Sicherheitsumhüllung (17), wenn sich die Sicherheitsumhüllung (17) in der Sicherheitsposition befindet, eine Höhe aufweist, die in die Richtung der zentralen Achse (2) gemessen wird, die größer ist, als die Höhe des Drahtes der oder einer jeden Klinge (3), die auf dem Klingenhalter (15) gehalten wird, die in die Richtung der zentralen Achse (2) gemessen wird, und dadurch, dass der Scheitelabschnitt (18) wenn sich die Sicherheitsumhüllung (17) in der eingezogenen Position befindet, eine Höhe aufweist, die geringer ist, als jene des Drahtes der oder einer jeden Klinge (3).

7. Vorrichtung (1) nach einem der Ansprüche 5 bis 6, **dadurch gekennzeichnet, dass** die Vorrichtung (1) zumindest ein Rückholorgan (19) umfasst, das angeordnet ist, um sich am Organ zum Festkeilen (16) und an der Sicherheitsumhüllung (17) anzulegen, um die Sicherheitsumhüllung (17) in die Sicherheitsposition zurückzuholen.

8. Vorrichtung (1) nach Anspruch 7, **dadurch gekennzeichnet, dass** die Sicherheitsumhüllung (17) zumindest eine primäre Öffnung (21) umfasst, das Organ zum Festkeilen (16) zumindest eine ergänzende Öffnung (22) gegenüber der zumindest einen primären Öffnung (21) umfasst, wobei die primäre Öffnung (21) und die ergänzende Öffnung (22) derart konfiguriert sind, um ein durchgehendes Fenster zu bilden, wenn sich die Sicherheitsumhüllung (17) in der Sicherheitsposition befindet, wobei sich das Rückholorgan (19) an den gegenüberliegenden Rändern des durchgehenden Fensters anlegt.

9. Vorrichtung (1) nach Anspruch 8, **dadurch gekennzeichnet, dass** das zumindest eine Rückholorgan (19) konfiguriert ist, um sich zu komprimieren, wenn eine Schwerkraft mit einer vorbestimmten Stärke auf den Scheitelabschnitt (18) der Sicherheitsumhüllung (17) angewandt wird, um die Verschiebung der Sicherheitsumhüllung (17) von der Sicherheitsposition zur eingezogenen Position auszulösen.

10. Vorrichtung (1) nach einem der Ansprüche 5 bis 9, **dadurch gekennzeichnet, dass** eine Vielzahl von Öffnungen (23) in den seitlichen Abschnitten der Sicherheitsumhüllung (17) angebracht ist, um die Reinigung vor allem mit einem Wasserschlauch zu erleichtern.

11. Vorrichtung (1) nach einem der Ansprüche 1 bis 10, **dadurch gekennzeichnet, dass** die oder jede Klinge (3) einen Querschnitt in einer allgemeinen Kreisbogenform umfasst.

12. Vorrichtung (1) nach einem der Ansprüche 1 bis 11, **dadurch gekennzeichnet, dass** die Vorrichtung (1) zumindest drei Klingen (3) umfasst.

13. Vorrichtung (1) nach einem der Ansprüche 1 bis 12, **dadurch gekennzeichnet, dass** die Spitze (5) ein konisches Ende (6) und einen kegelstumpfförmigen Abschnitt (7) umfasst, wobei der halbe Winkel an der Spitze des konischen Endes (6) größer ist, als der halbe Winkel an der Spitze des kegelstumpfförmigen Abschnitts (7).

14. Vorrichtung (1) nach einem der Ansprüche 1 bis 13, **dadurch gekennzeichnet, dass** sich jedes Immobilisierungsmittel in einer Sekundärachse (14) fortsetzt, die sich entlang der Höhe des freien Endes einer jeden Klinge (3) erstreckt, wobei die Spitze einer jeden Sekundärachse (14) eine zylindrische Form aufweist, die durch eine schräge Ebene im Verhältnis zu jeder Sekundärachse (14) gestutzt wird.

## Claims

1. A device (1) intended for opening bags, in particular bags containing materials for agriculture and industry, the device (1) comprising a central axis (2) oriented along a vertical direction, whose upper portion comprises at least one tip (5) adapted to pierce a bag, the device (1) further comprising at least one blade (3) adapted to cut off a bag and secured to a lower portion (8) of the central axis (2), the or each blade (3) having a sharp edge oriented towards the upper portion of the central axis (2), **characterized in that** the device (1) also comprises immobilization means arranged to immobilize a free portion of each blade (3) opposite to the lower portion (8) of the central axis (2).

2. The device (1) according to claim 1, **characterized in that** the length of each blade (3), measured between the central axis (2) and one end area of the blade (3) is larger than the height of each blade (3) measured along a direction parallel to the central axis (2).

3. The device (1) according to any of claims 1 to 2, **characterized in that** the device (1) comprises at least one blade support (15) configured to support at least said one blade (3).

4. The device (1) according to claim 3, **characterized in that** the device (1) comprises at least one wedging member (16) configured to wedge the at least one blade (3) along a lateral direction, and **in that** the wedging member (16) is fastened to the blade support (15) so that the top portion (24) of the wedging member (16) has an altitude, measured along the direction of the central axis (2), lower than the altitude of the sharp edge of the at least one blade (3) supported on the blade support (15), measured along the direction of the central axis (2).

5. The device (1) of claim 4, **characterized in that** the device (1) comprises a safety envelope (17) configured to envelop at least partially the or each blade (3) and the at least one wedging member (16), the safety envelope (17) being movable between a safety position in which the safety envelope (17) covers the sharp edge of the or each blade (3) and a retracted position in which the safety envelope (17) releases the sharp edge of the or each blade (3).

6. The device (1) according to claim 5, **characterized in that**, when the safety envelope (17) is in the safety position, the top portion (18) of the safety envelope (17) has an altitude, measured along the direction of the central axis (2), greater than the altitude of the sharp edge of the or each blade (3) supported by the blade support (15), measured along the direction of the central axis (2), and **in that**, when the safety envelope (17) is in the retracted position, the top portion (18) has an altitude lower than the sharp edge of the or each blade (3).

7. The device (1) according to any of claims 5 to 6, **characterized in that** the device (1) comprises at least one return member (19) arranged to bear against the wedging member (16) and against the safety envelope (17) so as to return the safety envelope (17) in the safety position.

8. The device (1) according to claim 7, **characterized in that** the safety envelope (17) comprises at least one main opening (21), the wedging member (16) comprises at least one complementary opening (22) facing the at least one main opening (21), the main opening (21) and the complementary opening (22) being configured to form a through window when the safety envelope (17) is in the safety position, the return member (19) bearing against opposite edges of the through window.

9. The device (1) according to claim 8, **characterized in that** the at least one return member (19) is configured to be compressed when a gravitational force of a predetermined intensity is applied on the top portion (18) of the safety envelope (17), so as to cause the displacement of the safety envelope (17) from the safety position to the retracted position.

10. The device (1) according to any of claims 5 to 9, **characterized in that** a plurality of orifices (23) is arranged in lateral portions of the safety envelope (17) so as to facilitate the cleaning, in particular with water jet.

11. The device (1) according to any of claims 1 to 10, **characterized in that** the or each blade (3) comprises a generally arc-shaped section.

12. The device (1) according to any of claims 1 to 11, **characterized in that** the device (1) comprises at least three blades (3).

13. The device (1) according to any of claims 1 to 12, **characterized in that** the tip (5) comprises a conical end (6) and a truncated-cone portion (7), the half-angle at the top of the conical end (6) being greater than the half-angle at the top of the truncated-cone portion (7).

14. The device (1) according to any of claims 1 to 13, **characterized in that** each immobilization means extends through a secondary axis (14) extending along the height of the free end of each blade (3), the top of each secondary axis (14) having a truncated cylindrical shape by a plane oblique to each secondary axis (14).
